# EUROPEAN PATENT SPECIFICATION

(11) **EP 3 426 386 B1**
(45) Date of publication and mention of the grant of the patent: **11.08.2021**
(21) Application number: 17763660.2
(22) Date of filing: 08.03.2017
(51) Int. Cl.: B01J 13/00, C08B 15/10, C08J 9/28, C08J 9/42, D21H 11/18, H01B 1/12, B82Y 30/00, C08J 9/36

(54) **NANOCELLULOSE AEROGEL PARTICLES HAVING CONTROLLED ELECTRICAL CONDUCTANCE, AND USES THEREOF**
NANOCELLULOSE-AEROGELPARTIKEL MIT KONTROLLIERTER ELEKTRISCHER LEITFÄHIGKEIT UND VERWENDUNGEN DAVON
PARTICULES D'AÉROGEL DE NANOCELLULOSE PRÉSENTANT UNE CONDUCTANCE ÉLECTRIQUE RÉGULÉE, ET LEURS UTILISATIONS

(30) Priority: 11.03.2016 SE 1650337
(43) Date of publication of application: 16.01.2019
(73) Proprietor: RISE Innventia AB, 114 86 Stockholm (SE); RISE Acreo AB, 164 25 Kista (SE)
(72) Inventor: SANDBERG, Mats, 602 17 Norrköping (SE); GRANBERG, Hjalmar, 602 16 Norrköping (SE); ERLANDSSON, Johan, 129 52 Hägersten (SE); WÅGBERG, Lars, 115 45 Stockholm (SE)
(74) Representative: Zacco Sweden AB
(86) International application number: PCT/SE2017/050220
(87) International publication number: WO 2017/155455

(56) References cited:
- WO-A1-2016/079140
- JONAS LINDH ET AL: "Convenient One-Pot Formation of 2,3-Dialdehyde Cellulose Beads via Periodate Oxidation of Cellulose in Water", BIOMACROMOLECULES, vol. 15, no. 5, 12 May 2014 (2014-05-12), pages 1928-1932, XP055181160, ISSN: 1525-7797, DOI: 10.1021/bm5002944
- ERLANDSSON, J. ET AL.: 'Macro-and mesoporous nanocellulose beads for use in energy storage devices' APPLIED MATERIALS TODAY vol. 5, 2016, pages 246 - 254, XP055415364
- YANG, X. ET AL.: 'Chemically Cross-Linked Cellulose Nanocrystal Aerogels with Shape Recovery and Superabsorbent Properties' CHEMISTRY OF MATERIALS vol. 26, 2014, pages 6016 - 6025, XP055415368
- HAMEDI, M. ET AL.: 'Nanocellulose Aerogels Functionalized by Rapid Layer-by-Layer Assembly for High Charge Storage and Beyond' ANGEWANDTE CHEMIE INTERNATIONAL EDITION vol. 52, 2013, pages 12038 - 12042, XP055421136
- NYSTROM, G. ET AL.: 'Self-assembled three-dimensional and compressible interdigitated thin-film supercapacitors and batteries' NATURE COMMUNICATIONS vol. 6, page 7259, XP055421149

## Description

### TECHNICAL FIELD

The present disclosure relates in general to nanocellulose gel particles having tailored electrical conductance and a method of producing such products. The present disclosure also relates to applications for the nanocellulose gel particles.

### BACKGROUND ART

As energy systems adapt to the rapidly increasing production of energy from transient renewable sources such as solar and wind power, there is an increasing interest in bulk energy storage technologies. Among such energy storage technologies, flow batteries and flow capacitors for grid storage, or off-grid storage have attracted much interest. An advantage of flow batteries is that their storage capacity can be increased by increasing the volume of the charge storage media, making them highly scalable. Recently, semi-solid flow systems have been developed, utilizing slurries of a particulate material in an electrolyte.

Aerogels are synthetic porous ultralight materials derived from gels, wherein the liquid component of the gel has been replaced by air. They are of great interest for the production of advanced materials, and applications within energy storage have been investigated.

Recently, aerogels derived from nanocellulose have gained considerable interest as an abundant, bio-derived and renewable aerogel source. However, a number of factors have hindered the widespread adoption of nanocellulose aerogels.

Prior art nanocellulose aerogels are inherently friable, which limits the ability to control the shape and size distribution of aerogel particles obtained by milling of macroscopic aerogel. Thus, applications of nanocellulose aerogels in cases where uniform aerogel shapes are required are difficult to realize with the current state of the art.

Another problem associated with native nanocellulose aerogels is their poor water stability, limiting their utility and ability to be functionalized using traditional wet chemistry. In order to provide wet-stability to nanocellulose aerogels it has been necessary to add a separate chemical cross-linking agent to the nanocellulose gel, which can then be cross-linked by, for example, thermal curing.

Another method of crosslinking is by cryogelation, whereby a nanocellulose gel is slowly frozen to create a highly porous and wet-stable structure. However the cryogelation process has the drawback of requiring removal of the liquid from the nanocellulose gel whilst eliminating densifying capillary forces in order to avoid collapse of the aerogel structure. This can be performed either by freeze-drying (lyophilisation) of the nanocellulose gel or by critical point drying (supercritical drying), but both of these drying methods are inconvenient, require high energy inputs and specialized equipment. Moreover, an additional cross-linking step is often required after drying in order to increase wet-stability.

Hamedi *et al* (Hamedi, Mahiar, Erdem Karabulut, Andrew Marais, Anna Herland, Gustav Nyström, and Lars Wågberg. "Nanocellulose Aerogels Functionalized by Rapid Layer-by-Layer Assembly for High Charge Storage and Beyond." Angewandte Chemie International Edition 52, no. 46 (2013): 12038-12042) describe the synthesis of macroscopic nanocellulose aerogels functionalized by rapid layer-by-layer assembly for charge storage. NFC aerogels cross-linked using 1,2,3,4-butanetetracarboxylic acid were functionalized using *inter alia* PEDOT:PSS and single-wall carbon nanotubes.

Despite known solutions, there remains a need to improve the properties of nanocellulose aerogels for electrical applications, and the methods by which they are manufactured.

### SUMMARY OF THE INVENTION

The inventors of the present invention have identified the shortcomings of the prior art. They have realized that nanocellulose gels could be utilized in new applications, such as flow batteries or conductive inks, if they were provided with the properties required for the specific application. They have recognized that there is a need for nanocellulose gels that can readily be formed to the size and shape required for any electrical application. They have recognised that there is a need for nanocellulose gels that display wet-stability even after prolonged exposure to liquid water, without the need for additional cross-linking agents. They have moreover identified the need for a method of producing highly wet-stable functional nanocellulose gels that can readily be formed to provide gels of a uniform desired shape and dimension, without the need for expensive drying and curing procedures, or additional chemical crosslinking agents.

Thus, it is an object of the present invention to provide nanocellulose gels in particle form that are highly wet-stable, have tailored electrical properties and can be produced to any desired size distribution.

It is a further object of the invention to provide a simple, efficient and widely applicable method of producing wet-stable nanocellulose gels in a desired size distribution with tailored electrical properties.

According to one aspect of the present invention, these objects are achieved by a nanocellulose gel particle having tailored electrical conductance according to the appended claims. The nanocellulose gel comprises a nanocellulose gel functionalized with at least one layer of an electrically conducting material, wherein that the nanocellulose gel is in particle form and comprises freeze-linked, periodate-oxidized nanocellulose.

Nanocelluose gels formed from freeze-linked, periodate-oxidized nanocellulose are readily formed into particles of any desired shape distribution during production. The nanocellulose gel particles comprising electrically conducting material have tailored electrical properties and high wet stability, making them highly suitable for applications such as flow batteries or functional inks for printed electrical components. Moreover, the high elasticity of the gel particles is also an advantage in flow applications, since the ability to temporarily deform means that the particles are less likely to fasten in flow channels and can be flattened to improve contact with various components.

The nanocellulose gel particle may be essentially spherical. It may also have a controlled size distribution. The ability to control the shape and/or size of the particles formed means that they can be tailored to the specific application at hand.

The nanocellulose gel particle may have a diameter of from about 100 nm to about 10 mm, preferably from about 1 µm to about 3 mm. These are suitable diameters for many potential applications and it is difficult to obtain nanocellulose gel particles of these diameters using the state of the art.

The electrically conducting material of the nanocellulose gel particle may be selected from the group consisting of aluminium, silicon, conducting carbon materials and conducting polymers; preferably carbon nanotubes, fullerenes, graphene, polythiophenes, and derivatives thereof; such as carboxyl functionalized single wall carbon nanotubes or sodium poly[2-(3-thienyl)ethyloxy-4-butylsulfonate]. These materials are known to conduct electricity well, meaning that the nanocellulose gel particle can be provided with the desired conductivity.

The nanocellulose gel particle to may be functionalized by from one up to and including 100 layers of electrically conducting material, preferably from five up to and including forty layers. Increasing the number of layers may improve the electrical conductivity of the nanocellulose gel particle.

The nanocellulose gel particle may be functionalised with at least one layer of a redox-active material, preferably from one up to and including 100 layers. By having a redox-active material, the electrical conducting ability and/or charge storage ability of the nanocellulose gel particle may be improved.

The redox-active material may be selected from redox-active small molecules or redox polymers, preferably polythiophenes or polymer-bound derivatives of quinone, anthraquinone, tetrathiofulvalene, ferrocene or TEMPO. These materials are known to provide an alternative charge transfer process as compared to the electrically conducting materials, thus allowing the properties of the nanocellulose gel particle to be tailored.

According to a further aspect of the present invention, the objects of the present invention are achieved by a method of producing nanocellulose gel particles having tailored electrical conductance, the method comprising the following steps:
a) providing an aqueous nanocellulose dispersion;
b) forming particles of the selected size from the nanocellulose dispersion;
c) oxidizing the nanocellulose dispersion with periodate;
d) freezing the oxidized nanocellulose dispersion;
e) thawing the oxidized nanocellulose dispersion, thereby forming a nanocellulose gel;
f) optionally performing a solvent exchange on the nanocellulose gel;
g) optionally removing water and/or solvent from the nanocellulose gel, thereby providing nanocellulose gel particles;
h) functionalizing the nanocellulose gel particles with electrically conducting material, thereby providing nanocellulose gel particles having tailored electrical conductance,
wherein step b) is performed prior to step c), simultaneously with step c) or after step c), and step h) is performed prior to step g) or after step g).

Nanocelluose gels formed from freeze-linked, periodate-oxidized nanocellulose are readily formed into particles of any desired shape distribution during production. The periodate oxidation of nanocellulose followed by freeze-linking, i.e. freezing and thawing the oxidized nanocellulose dispersion, provides a strongly cross-linked structure that is sufficiently stable so that water and/or solvent can be removed from the dispersion in the liquid phase, without risking collapse of the structure due to capillary forces. Therefore, freeze-drying or supercritical drying is not required, and the nanocellulose gel can be dried using conventional means, such as pressing, filtration, evaporation or combinations thereof. Optionally, the gel may be functionalized and used directly without drying. The obtained gel retains the shape that it was formed in, even under wet conditions. This means that the particle can be functionalized using conventional wet chemistry techniques. The nanocellulose gel particles obtained are functionalized with electrically conducting material, thus providing tailored electrical properties to the nanocellulose gel particle. The particles obtained by the method are highly elastic and if temporarily deformed by stretching or compression, will return to their original shape afterwards, even if wet.

The method may comprise functionalizing the nanocellulose gel particles using a layer-by-layer technique. The layer-by-layer technique can be adapted to provide the nanocellulose gel particle with a wide range of different layer materials.

Alternating layers of electrically conducting material and redox-active material may be deposited in order to form bilayers. Thus a product including both faradaic and non-faradaic conduction paths can be obtained. This product may be more suitable for charge storage applications.

Step h) of the method may be performed prior to step g). The hydrogel obtained from periodate oxidation followed by freeze-linking is sufficiently stable that functionalization can be performed prior to drying of the nanocellulose gel. This means that potentially fewer drying stages are necessary for the production of the functionalized nanocellulose gel particle, and potentially less solvent is needed.

Step g) of the method may be performed by removing the water and/or solvent from the hydrogel by pressing, filtration, evaporation, or combinations thereof.

The aqueous nanocellulose dispersion used in the method may comprise from about 0.4 to about 10 percent of nanocellulose, preferably from about 1 to about 5 percent of nanocellulose, defined as dry weight nanocellulose relative to the total weight of the aqueous nanocellulose dispersion. This provides a nanocellulose dispersion with suitable concentration and rheological properties for producing the nanocellulose gel particles.

Step b) of the method, regarding forming the nanocellulose dispersion to particles of a selected size, may be performed by a method selected from extrusion, printing, 3D-printing, molding, emulsifying and deposition on a hydrophobic surface. This allows for particles having a suitable size, shape and size distribution to be produced.

In a further aspect, the present invention regards a semi-solid flow battery comprising a nanocellulose gel particle of the present invention in an electrolyte. The nanocellulose gel particles of the present invention are excellently suited to flow battery applications due to their appropriate dimensions, tailored electrical conductance, wet-stability and elasticity.

In another aspect, the present invention regards an electrochemical flow capacitor comprising a nanocellulose gel particle of the present invention in an electrolyte. The nanocellulose gel particles of the present invention are excellently suited to flow capacitor applications due to their appropriate dimensions, tailored electrical conductance, wet-stability and elasticity.

In yet a further aspect, the present invention regards a printed electronic component for a capacitor or battery, produced by printing the electronic component using nanocellulose gel particles according to any one of claims 1-7 as the printing ink.

### DETAILED DESCRIPTION

### Definitions

Nanocellulose is further known as microfibrillated cellulose (MFC), nanofibrillated cellulose (NFC), cellulose nanofibrils (CNF), bacterial cellulose (BC) and cellulose nanocrystals (CNC). CNF is the preferred form of nanocellulose in the present invention. By nanocellulose it is meant cellulose fibre derived material that is produced through an at least partly mechanical nanofibrillation process, whereby the fibre wall is disintegrated into a major fraction of individualized elementary nanofibrils and their aggregates. Nanofibrils have diameters of roughly 5-100 nm and can have lengths up to several micrometers. The nanocellulose of the present invention is preferably from a plant- or wood-derived source, and is therefore abundant, renewable and biodegradable.

By aerogel it is meant a synthetic porous ultralight material derived from a gel, wherein the liquid component of the gel has been replaced by a gas. Aerogels can be prepared by removing water and/or solvent from the nanocellulose gel whilst the water and/or solvent of the nanocellulose gel is in the liquid phase. Such gels that are prepared by removing water and/or solvent from the nanocellulose gel whilst the water and/or solvent of the nanocellulose gel is in the liquid phase may otherwise be known as xerogels.

### Method

The nanocellulose gels of the present invention may be produced by a method comprising the following steps. The steps are performed in alphabetical order unless otherwise specified.

a) Providing an aqueous nanocellulose dispersion.

The nanocellulose is provided as a dispersion which may comprise from about 0.4 to about 10 percent of nanocellulose, defined as dry weight nanocellulose relative to the total weight of the aqueous nanocellulose dispersion. Preferably, the aqueous nanocellulose dispersion may comprise from about 1 to about 5 percent of nanocellulose. The aqueous nanocellulose dispersion may essentially consist only of nanocellulose and water. However, the aqueous nanocellulose dispersion may also comprise further additives, for instance in order to adapt the dispersion viscosity and/or freezing rate. Such additives may include salts, pH adjusting agents and/or co-solvents such as alcohols.

b) The nanocellulose dispersion is formed to particles.

Techniques that may be used for forming the particles includes extrusion, printing, 3D-printing, molding, emulsifying and deposition of droplets on a hydrophobic surface. These techniques can be performed using standard equipment as known in the art. The nanocellulose dispersion is adapted to have flow properties for the technique chosen. The nanocellulose dispersion particles may be formed prior to oxidation by periodate, as this is advantageous in some cases. However, the nanocellulose dispersion particles may also be formed at a time after adding periodate to the nanocellulose dispersion, i.e. whilst the oxidation is ongoing or completed.

The dispersion particles formed have all three dimensions in the range from about 100 nm to about 10 mm. Depending on the potential application, different particle sizes may be optimal. For example, for flow-battery or flow-capacitor applications, a monodisperse size distribution with particles in the range of from about 1 µm to about 6 mm, or preferably from about 100 µm to about 3 mm, may be appropriate. For printing applications, such as screen-printing of electronic components, a polydisperse size distribution with particles in the range of from about 500 nm to about 200 µm, or preferably from about 1 µm to about 50 µm, may be appropriate. Suitable particle size and dispersity can be obtained by careful choice of the forming method used. The particles are preferably essentially spherical, i.e. they resemble a sphere to the naked eye.

c) The nanocellulose dispersion is oxidized with periodate either prior to, simultaneously with, or after forming particles.

By periodate it is meant any chemical compound including a periodate moiety. The periodate moiety can be a metaperiodate or a orthoperiodate. Such compounds include sodium periodate, potassium periodate and periodic acid. Sodium metaperiodate is preferred.

If the oxidation is to take place prior to, or simultaneously with particle forming, the periodate may be blended into the nanocellulose dispersion, either as a solid or in solution. A suitable periodate concentration in this case is from about 0.5 to about 10 percent, defined as dry weight periodate relative to the total weight of the aqueous nanocellulose dispersion. If the oxidation is performed after forming particles, the formed particles may be soaked in a periodate bath for a specified period of time until a desired degree of oxidation is obtained. The periodate bath may suitably have a periodate concentration of from about 0.5 to about 10 percent by weight. The oxidation may suitably be performed at any temperature above the melting point of water (0 °C at ambient pressure) and below the boiling point of water (100 °C at ambient pressure). However, an optimal balance between reaction rate and selectivity is obtained by performing the oxidation at from about +10 °C to about 40 °C. The oxidation may be performed for a duration of from about 30 minutes to about 48 hours.

During oxidation, the nanocellulose dispersion particles may shrink isotropically by as much as 50%. Without wishing to be bound by theory, this may be due to the structural compaction of the gel during oxidation due to the increased flexibility induced to the fibrils by the opening of the repeating anhydroglucose units.

d) After oxidation, the nanocellulose dispersion is frozen.

The nanocellulose dispersion may be frozen at any temperature from -1 °C to -200 °C. Freezing at moderate temperatures of 0 °C to -50 °C provides gels that have larger pores, are stronger and have greater wet stability, but adequate wet stability is obtained even at lower freezing temperatures, such as from -70 °C to -200 °C. For example, nanocellulose dispersion particles frozen by immersion into a liquid nitrogen bath (-196 °C) have adequate mechanical- and wet-stability upon thawing, meaning that it is possible to perform the freezing step in a rapid and efficient manner. The duration of the freezing step can be readily determined by the skilled person and depends on the freezing temperature and the thickness of the substrate. However, freezing times of from about 30 seconds to about 48 hours may be applicable.

e) After freezing, the nanocellulose dispersion is then thawed to complete the cross-linking of the obtained nanocellulose hydrogel.

The hydrogel can be brought to any temperature above the melting point of water (0 °C at ambient pressure) and below the boiling point of water (100 °C at ambient pressure). However, excessively high temperatures lead to decomposition or side-reactions from any remaining periodate, and therefore temperatures of from about +1 °C to about 40 °C are often suitable. Depending on the time provided for oxidation in step c), the oxidation reaction may not have proceeded to completion and further oxidation and cross-linking of the cellulose may occur during the thawing stage. The hydrogel can be maintained at the thawing temperature for from about 30 minutes to about 48 hours.

A single freeze-thaw cycle is sufficient to provide a hydrogel with adequate strength and wet stability after drying. However, the strength and wet stability of the gel may in some cases be increased by performing multiple freeze-thaw cycles. If the nanocellulose dispersion was frozen rapidly, using for instance liquid nitrogen, then the mechanical integrity of the hydrogel may be increased by performing a subsequent additional oxidation step followed by an additional freeze-thaw step.

Without wishing to be bound by theory, the cross-linking of the nanocellulose gel is considered to proceed via hemiacetal bond formation between hydroxyl groups of the nanocellulose and aldehyde moieties introduced by periodate-induced oxidative cleavage of the C2-C3 bond of the repeating anhydroglucose units in the nanocellulose. Judging by the mechanical integrity and wet strength of the final nanocellulose gel products, the hemiacetal bonds formed are both abundant and resilient. This is unexpected, since in aqueous solution the equilibrium of "free" hemiacetals is strongly shifted towards the corresponding alcohol and aldehyde.

f) After performing the freeze-linking stage, the hydrogel may be washed in order to remove unreacted reagent, reaction byproducts and cellulose not forming part of the crosslinked nanocellulose gel network.

This can be performed, for example, by exchanging the liquid phase of the gel a number of times, with a suitable incubation time between each exchange. The exchange may be performed using water only, or may be performed using one or several organic solvents. Suitable solvents include, but are not limited to, acetone, methanol, ethanol, propanol, butanol, THF and 1,4-dioxane. For example, the liquid phase of the nanocellulose gel may first be exchanged using ethanol multiple times, e.g. 1-5 times, followed by exchange using acetone multiple times, e.g. 1-5 times.

g) The freeze-linked nanocellulose gels are then optionally dried.

Due to the extensive cross-linking obtained by periodate oxidation and freeze-linking, the gels can withstand densifying capillary forces during drying and therefore conventional drying means such as filtration and evaporation may be utilized. By evaporation it is meant both forced evaporation using for example elevated temperature, reduced pressure and/or a forced flow of drying gas, and natural evaporation, i.e. air drying, which occurs under ambient conditions. The nanocellulose gels have such mechanical integrity that liquid may even be removed by pressing the formed nanocellulose particles. Upon release of the pressure, the gels return to their original shape. Being able to dry the gels by conventional means such as pressing, filtration and evaporation, as compared to freeze-drying and supercritical drying, is a significant advantage, especially in bulk applications. Upon drying, the dimensions of the nanocellulose particle are contracted somewhat, but the main shrinkage in dimension takes place during the oxidation stage. The drying stage may even be avoided entirely, whereby the nanocellulose gels are functionalized directly from wet in a suitable reaction medium. The reaction medium can then be exchanged for a liquid suitable for the relevant application, such as a (poly)electrolyte or printing vehicle.

h) Functionalizing the nanocellulose gel particles

The nanocellulose gel particles can be functionalized either prior to the drying step g) or after the drying step g). Perfoming the functionalization prior to drying means that fewer drying steps are required during the process as a whole, and the quantity of water and/or solvents required may be reduced.

Functionalization may be performed using any technique known in the art, and the functional moieties may be bound to the gel covalently, electrostatically, by hydrogen-bonding, or by any other means of interaction known in the art.

A preferred technique for functionalization is the layer-by-layer (LbL) technique. The LbL technique is a generic technique for coating functional materials onto surfaces. In the LbL technique alternating layers of oppositely charged materials, often provided as an aqueous dispersion, are deposited on the nanocellulose gel particle, with wash steps in between. The nanocellulose gel particle has an implicit negative charge, so a first cationic layer must be deposited. This is followed by washing to remove excess reagent, followed by deposition of an anionic layer. After a further washing step, the procedure is repeated to deposit alternating cationic and anionic layers and form the multilayer structure. A deposited layer of a cationic material followed by an anionic layer is termed a bilayer, i.e. the number of bilayers is equal to half the total number of deposited layers.

The assembly of LbL layers depends on the electrostatic interaction between adjacent layers, and therefore polyionic macromolecules such as polyelectrolytes or nanoparticle derivatives are most commonly used as layer material in the LbL technique. In the present application it is desirable to provide the nanocellulose gel particles with modified conducting properties. Therefore, the nanocellulose gel particles are functionalized with an electrically conducting material. By electrically conducting material it is meant any non-insulator material, that is to say any material having a resistivity less than about 10¹⁰ Ω.m at 20 °C, such as less than about 10³ Ω.m, i.e. semi-conducting materials and conducting materials. Conducting materials including, but not limited to, metals, conducting carbon materials, silicon and conducting polymers are suitable for use as an electrically conducting material. Silicon, if used, may be doped by any means known in the art. Suitable metals include, but are not limited to, aluminium. Conducting carbon materials include, but are not limited to, single-walled carbon nanotubes, multi-walled carbon nanotubes, fullerenes, graphene and carbon black and derivatives thereof. Conducting polymers include, but are not limited to, poly(fluorine)s, polyphenylenes, polypyrenes, polyazulenes, polynaphthalenes, polyacetylenes, poly(p-phenylene vinylene)s, poly(pyrrole)s, polycarbazoles, polyindoles, polyazepines, polyanilines, polythiophenes (such as PEDOT), poly(p-phenylene sulphide)s, and derivates thereof. The electrically conducting material, if not already suitably charged, is derivatised with either negatively charged groups or positively charged groups in order to make it suitable for deposition using the LbL technique. The electrically active material is prepared as a dispersion suitable for LbL deposition by means known in the art.

For charge storage applications, nanocellulose gel particles having a combination of electrical conductance, ionic conductance and charge capacity are desirable, i.e. a combination of faradaic and non-faradaic processes. Therefore, layers of a redox-active polymer may also be deposited on the nanocellulose gel particle using the LbL technique, in order to provide nanocellulose gel particles with improved suitability for charge-storage applications. The redox polymer may be chosen from any known in the art, including polymers incorporating redox-active moieties such as quinone, anthraquinone, tetrathiofulvalene, ferrocene or TEMPO moieties, either in the polymer backbone or as pendant groups, or ion exchange polymers containing redox centers bound by electrostatic or dative bonding. Such redox polymers include, but are not limited to, poly(tetracyanoquinodimethane)s, poly(viologens) poly(tetrathiofulalene)s, poly(vinyl-p-benzoquinone), poly(anthraquinone), PEDOT and poly(vinylferrocene). The redox-active material, if not already suitably charged, is derivatised with either negatively charged groups or positively charged groups in order to make it suitable for deposition using the LbL technique. The redox-active material is prepared as a dispersion suitable for LbL deposition by means known in the art.

Alternating layers of electrically conducting material and redox-active material may be deposited using an anionic electrically conducting material and a cationic redox-active material, or vice-versa. However, any other combinations of layering, such as a concentration of redox-active material in the core and electrically-conducting material in the shell, or vice-versa, may be used.

The number of layers deposited depends on the application and properties of the components, but it may be possible to deposit at least 100 layers (50 cationic, 50 anionic) in some cases. At least one layer of the electrically active material should be deposited, but preferably from five to forty layers of the electrically conducting material are deposited. Up to 100 layers of the redox-active material may be deposited.

### Nanocellulose gel particles

The nanocellulose gel particles obtained by the above method have a number of interesting properties. Their conductance and other electrical properties can be tailored to any specific application. They can be formed to any desirable particle size tailored to any potential application. They are highly wet-stable. This means that they can be functionalised using conventional wet chemistry methods, but also that they can be used in applications requiring extended contact with water or other liquids, such as flow battery or flow capacitor applications. They have a high elasticity, meaning that they can be deformed by compression or stretching and return to their original shape afterwards, even after soaking in water. This means that they can avoid fastening in flow channels by temporary deformation, or can be pressed together with an electrical contact surface in order to provide better electrical contact.

### Applications

Nanocellulose gel particles obtained by the present method have a variety of potential uses.

For example, the nanocellulose gel particles may be used in charge storage applications, for example as charge-storage beads in semi-solid flow batteries or flow capacitors.

A semi-solid flow battery operates as follows. The positive and negative electrodes are composed of a slurry of charge-storage particles in a carrier electrolyte. The positive and negative slurries are stored in separate tanks and pumped through separate pipes into a reaction chamber, where they are separated by a membrane 1. Current is provided by ion exchange through the membrane, whilst both slurries remain separated in their own respective tanks. The spent slurry may then be collected in a separate tank, or may be pumped back to the original storage tank. The energy storage can be increased by increasing the volume of charge-storage slurry contained in the tanks, and therefore flow batteries are of great and current interest for e.g. grid storage applications.

The nanocellulose gel particles of the present invention are ideally suited as charge storage particles in flow battery applications. They can be tailed to any appropriate size, can be provided with the appropriate electrical conductance and charge storage properties by functionalization, and are highly wet-stable and can therefore tolerate elongated use in the electrolyte of the flow battery. For flow-battery or flow-capacitor applications, a monodisperse size distribution with particles in the range of from about 1 µm to about 6 mm, or preferably from about 100 µm to about 3 mm, may be appropriate. Moreover, their ability to deform and recover shape after deformation means that they are less liable to fasten in any flow channels of the flow battery as compared to non-compressible particles. This same ability means that they are capable of flattening to ensure optimal contact with, and charge transfer over, the flow battery membrane.

A further application of the nanocellulose gel particles is in the formation of printed electronic components. Nanocellulose gel particles having the desired electrical properties can be used as a component in a conductive ink, dispersed in a printing vehicle and deposited by e.g. screen printing in order to form printed electronic components. For printing applications, such as screen-printing of electronic components, a polydisperse size distribution with particles in the range of from about 500 nm to about 200 µm, or preferably from about 1 µm to about 50 µm, may be appropriate. The particles are preferably spherical since this limits entanglements between ink particles and optimizes the ink flow to the substrate. The particle size may for example be tailored to avoid the printed particles being able to enter a porous substrate such as paper. As a printing vehicle, aqueous electrolyte solutions, polyelectrolytes or non-aqueous ionic solvents such as e.g. ionic liquids may be used. Thus, for example, printed components for batteries or capacitors, such as electrodes or plates, may be printed.

The invention will now be illustrated by the following non-limiting examples.

### Examples

CNFs with a charge density of 600 µeq/g were provided by Innventia AB, Stockholm, Sweden as a 2 wt% aqueous dispersion prepared and characterized according to procedures described in: Wågberg, L., G. Decher, M. Norgren, T. Lindström, M. Ankerfors, and K. Axnäs, The Build-Up of Polyelectrolyte Multilayers of Microfibrillated Cellulose and Cationic Polyelectrolytes. Langmuir, 2008. 24(3): p. 784-795. Solid alkyl ketene dimer (AKD) was supplied by EKA Chemicals, Bohus, Sweden. Sodium metaperiodate was purchased from Alfa Aesar GmBH Co KB (Karlsruhe, Germany). Branched polyethyleneimine (PEI) with a molecular weight of 60 kDa was purchased as a 50 wt% aqueous solution from Arcos Organics (U.S). Sodium poly[2-(3-tienyl)ethoxy-4-butyl-sulfonate] (SPTBS) was acquired as a dry powder from American Dye Source Inc. (Montreal, QC, Canada). Stable dispersions were produced from single-walled carbon nanotubes (CF-SWCNTs) functionalized with carboxyl groups purchased from Carbon Solutions Inc (Riverside, CA, USA). All chemicals were used without further purification unless otherwise stated. MilliQ water was used throughout.

### Example 1a: Synthesis of spherical nanocellulose gel beads

Spherical particles were formed by placing CNF gel droplets on a superhydrophobic AKD surface produced by a Rapid Expansion from a Supercritical Solution (RESS) method. The CNF droplets were subsequently frozen, thawed, solvent-exchanged and dried to form the gel beads according to the following more detailed description.

A superhydrophobic AKD surface was used to ensure that the beads were as spherical as possible. This surface was produced by the following RESS method. About 2 g of AKD was placed in the spraying apparatus, the operating pressure was set to 25 MPa and the pre-heating stage, cell and nozzle temperatures were set to 70 °C, 70 °C and 90 °C respectively. After filling and pressurizing the pump with CO2, the valves were opened and when steady-state operating conditions had been reached a microscope slide was moved perpendicular to the nozzle at a distance of 30 mm. The total spraying volume was 70 mL. After spray deposition, the surface was transferred to and stored in a sealed petri-dish until further use.

In order to prepare the nanocellulose gel bead, sodium metaperiodate was added to a 2 wt% CNF gel and mixed thoroughly with an Ultra Turrax (IKA 115 Werke GmbH & Co. KG, Staufen, Germany) at 10 000 rpm for 5 min. The mixture was diluted with Milli-Q water and agitated vigorously to a low viscous CNF dispersion with a final CNF consistency of 1.4 wt% and a periodate concentration of 0.057 M. The periodate-containing CNF dispersion was transferred to a plastic syringe equipped with a 21G stainless steel needle with the sharp part cut off. Droplets of the periodate-containing CNF dispersion, with diameters <2.7 mm were then deposited on the superhydrophobic surface by hand. To prevent water from evaporating from the droplets, a lid was placed over the superhydrophobic surface. To further limit evaporation, a beaker containing hot water was placed under the lid. The whole set-up was then covered with aluminium foil to prevent exposure to light, and the CNFs were oxidized for 20 h, after which the beads formed were removed from the superhydrophobic surface, placed individually on a polystyrene surface and subsequently frozen at -18 °C for 2 h. The beads were thereafter completely thawed, without drying, at room temperature before being solvent-exchanged, first to 96 % ethanol and then to acetone. Both solvents were changed three times with an incubation time of 15 min between each solvent change. After solvent-exchange, the beads were collected by filtering off the acetone through a stainless steel mesh and completely dried in air while still resting on the mesh.

The final nanocellulose gel beads contained 2.1 mmol/g aldehyde corresponding to a degree of oxidation of about 18 % and had a total charge of 300 µeq/g. The oxidation of the CNFs was shown by a characteristic peak appearing at 1730 cm⁻¹ in the FTIR-spectra of the pristine gel beads. The beads were spherical with an average weight of 0.08 mg and an average diameter of 1.8 ± 0.2 mm. The drying procedure had no significant impact on the sphere diameter, which suggests that a strong CNF network is formed that can resist the capillary forces and prevent a collapse of the structure during drying. The gel beads had a (individual gel sphere) density of 24.5 kg/m3 and a porosity of 98%. The pores within the gel beads appear to be interconnected. This was supported by the fact that the beads did not float in water but were completely filled with water when completely submerged, resting on the bottom of the container. The beads had excellent shape-recovery properties and gel beads soaked for four days did not display any major reduction in their shape-recovery capacity as compared to beads soaked for only 30 minutes. This suggests that the nanocellulose gel bead structure is held together strongly and that the chemical cross-links are retained to a substantial extent even after four days in water.

### Example 1b: Functionalization of Nanocellulose gel Beads

The beads obtained in Example 1 were functionalized using a layer-by-layer technique. The spherical gel beads were functionalized with two different systems; SWCNT/PEI and SPTBS/PEI. For the SWCNT/PEI system, the concentrations of both species were 0.2 g/L, and for the SPTBS/PEI system the concentrations were 1 g/L. The pH of the PEI solution was adjusted to 10 by addition of sodium hydroxide solution and the pH of the SPTBS solution was adjusted to 4 by addition of hydrochloric acid.

Prior to functionalization the beads were washed by repeated soaking and dewatering until the conductivity of the washing water was below 5 µS/cm. The LbL procedure was then performed by alternately adding cationic PEI and anionic CF-SWCNTs or SPTBS to the vial containing the wet beads and allowing adsorption to take place for 5 min. To make sure that the beads were completely covered by the liquid, a plastic rod was used to push them to the bottom of the vial. The rest of the adsorption was carried out under continuous mild shaking of the vial on a shaking table. After 5 min, the non-adsorbed polyelectrolytes/nanoparticles were separated from the beads by filtration. Between each adsorbed layer, the beads were washed four times with 40 mL of water to remove polyelectrolyte/nanoparticles still remaining inside the beads.

The high specific surface area of the cross-linked gel beads in combination with their fairly high surface charge, 300 µeq/g, make them excellent templates for surface functionalization using the LbL-technique with charged polymers and nanoparticles. The functionalization by LbL formation of multilayers within the gel beads was successful and both the anionic and cationic components displayed linear growth behaviour when assembled into multilayers. The growth per layerwas calculated to be 23.2 and 19.6 mg/g for SPTBS and CF-SWCNTs, respectively, which corresponds to a total adsorbed amount of 116 mg/g and 98 mg/g in 5 bilayers.

Beads with one, three, five and 15 bilayers (PEI/CF-SWCNT) were formed. It could be seen that increasing the number of bilayers increased conductivity of the beads. Beads with five bilayers have 30 times greater conductivity than those having a single bilayer. The increase in conductivity did not display a linear relationship with the number of bilayers. The energy storage capacity of the nanocellulose gel beads was also investigated. The gel beads functionalized with 5 bilayers of PEI/CF-SWCNT displayed square-shaped cyclic voltammograms (CV) characteristic of supercapacitors for all the scan-rates investigated. The square shape of the CV-curves suggests a purely capacitive behaviour as a result of an electrical double layer. There is a significant difference between the reference and the bead sample which supports the conclusion that it is the bead that contributes the charge storing capacity. The capacitive behaviour was also retained to a great extent even after repeated cycling with up to 50 cycles.

### Example 2: Formation of polydisperse nanocellulose gel microspheres

A mixture of 15,5 g CNF gel (1,8 % (w/w), exfoliated by 4 passes through a homogenizer), 4,5 g water and 0,28 g sodium periodate, was mixed at 20500 rpm during 5 minutes in an Ultra-Turrax T25. A blend of said mixture (4 g) and castor oil (36 g), was first obtained by hand blending followed by emulsification in a rotational rheometer, RheolabQC, Anton Paar with measuring geometry CC39 at constant speed (1200 rpm) during 120 seconds.

The resulting emulsion was poured into aluminum molds (diameter 7,5 cm) in a thin layer and immediately frozen at -20 °C or in liquid nitrogen (-196 °C) and kept in a frozen state overnight.

After thawing, the emulsions were kept in the dark (to reduce side reactions) during 24 hours at room temperature or at +40°C. The removal of the castor oil and drying by solvent exchange was performed in three steps: First the emulsions were stirred with an excess of ethanol for 10 minutes and then filtered on a nylon wire filter. Then the resulting CNF particles were washed with ethanol, and finally washed with acetone. The particles were then left to dry on the nylon wire filter.

The resulting nanocellulose gel microspheres were polydisperse and had a particle diameter in the range from about 1 to about 50 µm.

These nanocellulose gel microspheres may be functionalized using the layer-by-layer technique as described above.

The microspheres obtained are suitable for stencil and/or screen printing when dispersed in a suitable printing vehicle.

## Claims

1. Nanocellulose gel particle having tailored electrical conductance, comprising a nanocellulose gel particle functionalized with at least one layer of an electrically conducting material, wherein the nanocellulose gel particle comprises freeze-linked, periodate-oxidized nanocellulose.

2. Nanocellulose gel particle according to claim 1, wherein the electrically conducting material is selected from the group consisting of aluminium, silicon, conducting carbon materials and conducting polymers; preferably carbon nanotubes, fullerenes, graphene, polythiophenes, and derivatives thereof; such as carboxyl functionalized single wall carbon nanotubes or sodium poly[2-(3-thienyl)ethyloxy-4-butylsulfonate].

3. Nanocellulose gel particle according to any one of the preceding claims, functionalized by from one up to and including forty layers of electrically conducting material, preferably from five up to and including forty layers.

4. Nanocellulose gel particle according to any one of the preceding claims, wherein the nanocellulose gel particle is functionalised with at least one layer of a redox-active material, preferably from one up to and including forty layers.

5. Nanocellulose gel particle according to claim 4, wherein the redox-active material is selected from redox-active small molecules or redox polymers, preferably polythiophenes or polymer-bound derivatives of quinone, anthraquinone, tetrathiofulvalene, ferrocene or TEMPO.

6. Method of producing nanocellulose gel particles having tailored electrical conductance, the method comprising the following steps:
a) providing an aqueous nanocellulose dispersion;
b) forming particles of the selected size from the nanocellulose dispersion;
c) oxidizing the nanocellulose dispersion with periodate;
d) freezing the oxidized nanocellulose dispersion;
e) thawing the oxidized nanocellulose dispersion, thereby freeze-linking the oxidized nanocellulose dispersion and forming nanocellulose gel particles;
f) optionally performing a solvent exchange on the nanocellulose gel particles;
g) optionally removing water and/or solvent from the nanocellulose gel particles by pressing, filtration, evaporation, or combinations thereof;
h) functionalizing the nanocellulose gel particles with electrically conducting material, thereby providing nanocellulose gel particles having tailored electrical conductance,
wherein step b) is performed prior to step c), simultaneously with step c) or after step c), and step h) is performed prior to step g) or after step g).

7. Method according to claim 6, wherein step h) comprises functionalizing the nanocellulose gel particles using a layer-by-layer technique, and optionally wherein alternating layers of electrically conducting material and redox-active material are deposited in order to form bilayers.

8. Method according to any one claims 6-7, wherein the aqueous nanocellulose dispersion comprises from 0.4 to 10 percent of nanocellulose, preferably from 1 to 5 percent of nanocellulose, defined as dry weight nanocellulose relative to the total weight of the aqueous nanocellulose dispersion.

9. Method according to any one claims 6-8, wherein step b) of forming the nanocellulose dispersion to particles of a selected size is performed by a method selected from extrusion, printing, 3D-printing, molding, emulsifying and deposition on a hydrophobic surface.

10. Semi-solid flow battery comprising a nanocellulose gel particle according to any one of claims 1-5 in an electrolyte.

11. Electrochemical flow capacitor comprising a nanocellulose gel particle according to any one of claims 1-5 in an electrolyte.

12. Printed electronic component for a capacitor or battery, produced by printing the electronic component using an ink comprising nanocellulose gel particles according to any one of claims 1-5 as the printing ink.

## Patentansprüche

1. Nanozellulosegelpartikel mit bedarfsgerechter elektrischer Leitfähigkeit, umfassend eine Nanozellulosegelpartikel, die mit mindestens einer Schicht eines elektrisch leitenden Materials funktionalisiert ist, wobei die Nanozellulosegelpartikel frierverbundene, periodatoxidierte Nanozellulose umfasst.

2. Nanozellulosegelpartikel nach Anspruch 1, wobei das elektrisch leitende Material aus der Gruppe bestehend aus Aluminium, Silizium, leitenden Kohlenstoffmaterialien und leitenden Polymeren; vorzugsweise Kohlenstoffnanoröhrchen, Fullerenen, Graphen, Polythiophenen und Derivaten davon; wie carboxylfunktionalisierten einzelwändigen Kohlenstoffnanoröhrchen oder Natrium-poly[2-(3-thienyl)ethyloxy-4-butylsulfonat] ausgewählt ist.

3. Nanozellulosegelpartikel nach einem der vorgehenden Ansprüche, funktionalisiert durch von einer bis zu und einschließlich vierzig Schichten von elektrisch leitendem Material, vorzugsweise von fünf bis zu und einschließlich vierzig Schichten.

4. Nanozellulosegelpartikel nach einem der vorgehenden Ansprüche, wobei die Nanozellulosegelpartikel mit mindestens einer Schicht eines Redox-aktiven Materials funktionalisiert ist, vorzugsweise von einer bis zu und einschließlich vierzig Schichten.

5. Nanozellulosegelpartikel nach Anspruch 4, wobei das Redox-aktive Material aus kleinen Redox-aktiven Molekülen oder Redox-Polymeren, vorzugsweise Polythiophenen oder polymergebundenen Derivaten von Chinon, Anthrachinon, Tetrathiofulvalen, Ferrocen oder TEMPO ausgewählt ist.

6. Verfahren zur Herstellung von Nanozellulosegelpartikeln mit bedarfsgerechter elektrischer Leitfähigkeit, welches Verfahren die folgenden Schritte umfasst:
a) Bereitstellen einer wässrigen Nanozellulosedispersion;
b) Bilden von Partikeln der ausgewählten Größe aus der Nanozellulosedispersion;
c) Oxidieren der Nnanozellulosedispersion mit Periodat;
d) Frieren der oxidierten Nanozellulosedispersion;
e) Auftauen der oxidierten Nanozellulosedispersion, wodurch die oxidierte Nanozellulosedispersion frierverbunden wird und Nanozellulosegelpartikel gebildet werden;
f) eventuelles Ausführen einer Lösungsmittelauswechselung auf den Nanozellulosegelpartikeln;
g) eventuelles Entfernen von Wasser und/oder Lösungsmittel von den Nanozellulosegelpartikeln durch Pressen, Filtrieren, Verdampfen oder Kombinationen davon;
h) Funktionalisieren der Nanozellulosegelpartikel mit elektrisch leitendem Material, wodurch Nanozellulosegelpartikel bereitgestellt werden, die bedarfsgerechte elektrische Leitfähigkeit aufweisen,
wobei Schritt b) vor Schritt c), gleichzeitig mit Schritt c) oder nach Schritt c) ausgeführt wird, und Schritt h) vor Schritt g) oder nach Schritt g) ausgeführt wird.

7. Verfahren nach Anspruch 6, wobei Schritt h) das Funktionalisieren der Nanozellulosegelpartikel unter Verwendung einer Schicht-an-Schicht-Technik umfasst, und eventuell wobei wechselnde Schichten von elektrisch leitendem Material und Redox-aktivem Material abgelagert werden, um Doppelschichten zu bilden.

8. Verfahren nach einem der Ansprüche 6-7, wobei die wässrige Nanozellulosedispersion von 0,4 bis 10 Prozent Nanozellulose, vorzugsweise von 1 bis 5 Prozent Nanozellulose, definiert als Trockengewicht Nanozellulose im Verhältnis zum Gesamtgewicht der wässrigen Nanozellulosedispersion umfasst.

9. Verfahren nach einem der Ansprüche 6-8, wobei Schritt b) des Bildens der Nanozellulosedispersion zu Partikeln einer ausgewählten Größe durch ein Verfahren ausgewählt aus Strangpressen, Drucken, 3D-Drucken, Formen, Emulgieren und Ablagern auf einer hydrophoben Oberfläche ausgeführt wird.

10. Halbfeste Flussbatterie umfassend eine Nanozellulosegelpartikel nach einem der Ansprüche 1-5 in einem Elektrolyten.

11. Elektrochemische Flusskondensator umfassend eine Nanozellulosegelpartikel nach einem der Ansprüche 1-5 in einem Elektrolyten.

12. Gedruckte elektronische Komponente für einen Kondensator oder eine Batterie, hergestellt durch Drucken der elektronischen Komponente unter Verwendung einer Tinte umfassend Nanozellulosegelpartikel nach einem der Ansprüche 1-5 als die Drucktinte.

## Revendications

1. Particule de gel de nanocellulose ayant une conductance électrique adaptée, comprenant une particule de gel de nanocellulose fonctionnalisée avec au moins une couche d'un matériau électriquement conducteur, dans laquelle la particule de gel de nanocellulose comprend de la nanocellulose oxydée au periodate et lyophilisée.

2. Particule de gel de nanocellulose selon la revendication 1, dans laquelle le matériau électriquement conducteur est choisi dans le groupe constitué de l'aluminium, du silicium, des matériaux de carbone conducteurs et des polymères conducteurs ; de préférence des nanotubes de carbone, des fullerènes, du graphène, des polythiophènes et des dérivés de ceux-ci ; tels que des nanotubes de carbone à paroi unique à fonctionnalité carboxyle ou du poly[2-(3-thiényl)éthyloxy-4-butylsulfonate de sodium].

3. Particule de gel de nanocellulose selon l'une quelconque des revendications précédentes, fonctionnalisée par une jusqu'à et y compris quarante couches de matériau électriquement conducteur, de préférence de cinq jusqu'à et y compris quarante couches.

4. Particule de gel de nanocellulose selon l'une quelconque des revendications précédentes, dans laquelle la particule de gel de nanocellulose est fonctionnalisée avec au moins une couche d'un matériau redox-actif, de préférence d'une jusqu'à et y compris quarante couches.

5. Particule de gel de nanocellulose selon la revendication 4, dans laquelle le matériau redox-actif est choisi parmi les petites molécules à activité redox ou les polymères redox, de préférence les polythiophènes ou les dérivés liés aux polymères de quinone, d'anthraquinone, de tétrathiofulvalène, de ferrocène ou de TEMPO.

6. Procédé de production de particules de gel de nanocellulose ayant une conductance électrique adaptée, le procédé comprenant les étapes suivantes consistant à :
a) fournir une dispersion de nanocellulose aqueuse ;
b) former des particules de la taille choisie à partir de la dispersion de nanocellulose ;
c) oxyder la dispersion de nanocellulose avec du periodate ;
d) congeler la dispersion de nanocellulose oxydée ;
e) décongeler la dispersion de nanocellulose oxydée, ce qui permet la lyophilisation de la dispersion de nanocellulose oxydée et la formation de particules de gel de nanocellulose ;
f) effectuer éventuellement un échange de solvant sur les particules de gel de nanocellulose ;
g) éliminer éventuellement l'eau et / ou le solvant à partir des particules de gel de nanocellulose par pression, filtration, évaporation, ou des combinaisons de celles-ci ;
h) fonctionnaliser les particules de gel de nanocellulose avec un matériau électriquement conducteur, fournissant ainsi des particules de gel de nanocellulose ayant une conductance électrique adaptée,
dans lequel l'étape b) est effectuée avant l'étape c), simultanément avec l'étape c) ou après l'étape c), et l'étape h) est exécutée avant l'étape g) ou après l'étape g).

7. Procédé selon la revendication 6, dans lequel l'étape h) comprend la fonctionnalisation des particules de gel de nanocellulose en utilisant une technique couche par couche, et facultativement dans lequel des couches alternées de matériau électriquement conducteur et de matériau redox-actif sont déposées afin de former des bicouches.

8. Procédé selon l'une quelconque des revendications 6 à 7, dans lequel la dispersion de nanocellulose aqueuse comprend de 0,4 à 10 pour cent de nanocellulose, de préférence de 1 à 5 pour cent de nanocellulose, définie comme une nanocellulose en poids sec par rapport au poids total de la dispersion de nanocellulose aqueuse.

9. Procédé selon l'une quelconque des revendications 6 à 8, dans lequel l'étape b) de formation de la dispersion de nanocellulose en particules d'une taille sélectionnée est réalisée par un procédé choisi parmi l'extrusion, l'impression, l'impression 3D, le moulage, l'émulsification et le dépôt sur une surface hydrophobe.

10. Batterie à flux semi-solide, comprenant une particule de gel de nanocellulose selon l'une quelconque des revendications 1 à 5 dans un électrolyte.

11. Condensateur à écoulement électrochimique, comprenant une particule de gel de nanocellulose selon l'une quelconque des revendications 1 à 5 dans un électrolyte.

12. Composant électronique imprimé pour un condensateur ou une batterie, produit en imprimant le composant électronique en utilisant une encre comprenant des particules de gel de nanocellulose selon l'une quelconque des revendications 1 à 5 en tant qu'encre d'impression.
